Europäisches Patentamt

European Patent Office

Office européen des brevets

(11) Publication number: **0 087 303**
**B1**

# (12) EUROPEAN PATENT SPECIFICATION

(45) Date of publication of patent specification: **06.05.87**

(51) Int. Cl.⁴: **H 04 N 9/82**

(21) Application number: **83300878.2**

(22) Date of filing: **18.02.83**

(54) Video and audio signal reproducing apparatus.

(30) Priority: **19.02.82 JP 25730/82**

(43) Date of publication of application:
**31.08.83 Bulletin 83/35**

(45) Publication of the grant of the patent:
**06.05.87 Bulletin 87/19**

(84) Designated Contracting States:
**AT DE FR GB NL**

(56) References cited:
**EP-A-0 038 566**
**EP-A-0 044 687**
**GB-A-2 059 135**

(73) Proprietor: **SONY CORPORATION**
**7-35 Kitashinagawa 6-Chome Shinagawa-ku**
**Tokyo 141 (JP)**

(72) Inventor: **Kamai, Toshimitsu c/o Patent Division**
**Sony Corporation 7-35 Kitashinagawa-6**
**Shinagawa-ku Tokyo (JP)**

(74) Representative: **Thomas, Christopher Hugo**
**et al**
**D Young & Co 10 Staple Inn**
**London WC1V 7RD (GB)**

Courier Press, Leamington Spa, England.

## Description

This invention relates to video and audio signal reproducing apparatus.

In video tape recorders (VTRs) for recording a colour television signal on a magnetic tape, the chrominance and luminance signal components which constitute the colour video signal are separated, and the chrominance signal component has its carrier frequency converted to a relatively low value, while the luminance component frequency modulates a relatively high frequency carrier. The frequency-converted chrominance signal component and the high side band of the frequency-modulated (FM) luminance signal component are then mixed or combined to form a composite colour video signal which is recorded on the tape in successive, parallel record tracks extending obliquely with respect to the longitudinal or running direction of the tape. In such existing systems for recording a colour television signal, the audio signal thereof is recorded on the tape in record tracks which extend in the longitudinal direction of the tape, and are hereinafter referred to simply as "audio tracks".

The oblique or slant tracks which are skewed relative to the tape are recorded by first and second substantially diametrically opposed rotary magnetic heads both supplied with the composite colour video signal and alternately scanning the tape along a path at an angle to the longitudinal direction in which the tape is transported. To increase the recording density of the colour video signal on the tape and thereby increase the duration of the recording, it has been known to restrict the speed at which the tape is transported so that the successive oblique tracks are closely or immediately adjacent to each other, that is, so that the space or so-called guard band between the adjacent oblique tracks will be eliminated. However, in this case, the problem of "cross-talk" arises in the reproducing mode. Thus, during reproducing, a head scanning one of the oblique tracks for reproducing the composite colour video signal recorded therein will also pick up signals or cross-talk from the next adjacent tracks.

The problem of cross-talk has been substantially solved, at least in respect of the relatively high frequency FM luminance signal component, by providing the first and second rotary magnetic heads with different azimuth angles so that the composite colour video signal will be recorded in each oblique track by means of a head having an azimuth angle different from that of the head with which the composite colour video signal is recorded in the next adjacent tracks. Thereafter, during reproducing, each oblique track is scanned by the rotary head having the corresponding azimuth angle with the result that a substantial azimuth loss occurs for the relatively high frequency cross-talk components from the adjacent tracks.

However, the azimuth loss effect is not very effective for the low frequency band of the cross-talk, that is, for the frequency-converted chrominance signal component, so that other measures need to be taken for eliminating or minimizing the low-frequency component of the cross-talk. For example, as disclosed in our US Patent No. 4 007 482, cross-talk for the frequency-converted chrominance signal component situated in a relatively low frequency band is substantially eliminated by recording the chrominance signal component with different first and second carriers in the adjacent tracks, respectively. Such first and second carriers modulated by the chrominance signal component may be distinguished from each other by their respective frequency and/or polarity characteristics so that, upon reproduction of the signal recorded in a particular track, the low frequency band of the cross-talk from the tracks next adjacent thereto can be conveniently suppressed or eliminated by reason of the different frequency and/or polarity or phase characteristics of the respective carriers.

More specifically, as disclosed in the above-mentioned US Patent No. 4 007 482, the chrominance signal component of the colour video signal to be recorded may be frequency-converted so as selectively to produce first and second frequency-converted signals which, when considered instantaneously, have the same carrier frequency, but which differ from each other in their phase or polarity characteristics. In this case, each of the line areas or increments of one track may have recorded therein a frequency-converted chrominance signal component with a carrier of constant polarity, while, in the next adjacent tracks, the carrier of the frequency-converted chrominance signal component recorded therein reverses its polarity for successive line intervals. Such pattern of recording ensures that, during reproduction, cross-talk effects can be minimized or eliminated. For example, during reproduction of the recorded signals, the reproduced signals of two successive line intervals may be added together by means of a suitable delay means, for example, by a simple comb filter, to cancel out, or at least minimize cross-talk interference signals associated with the desired reproduced signals of the two successive line intervals.

However, in the above-described system for recording and reproducing a colour television signal, each of the audio signals thereof, for example, the stereophonic left and right signals, is supplied to a respective fixed head which is continuously in contact with the tape adjacent to a longitudinal edge of the tape, so that the stereophonic left and right signals are respectively recorded in audio tracks extending longitudinally along the tape.

It will be appreciated that, when high density recording of the colour video signal in successive oblique tracks on the tape is effected as described above, the rotational speed of the rotary magnetic heads is relied upon to provide the desired relatively high speed of each head with respect to the tape for ensuring high quality recording of the colour video signal in the oblique tracks. However, for achieving the high density recording of the colour video signal, the transport speed of the tape is necessarily quite low, for example, about 1.33 cm/sec. Thus, the relative velocity between the tape and the fixed heads which record the audio signals in the respective audio tracks is quite low, with the result that the quality of the audio recording is deteriorated.

In order to solve the above problem associated with the recording of the audio signals, it has been proposed that the audio signals be frequency-modulated and then mixed with the composite colour video signal to provide a mixed or combined signal supplied to the rotary magnetic heads for recording in the oblique tracks. Although this ensures that the relative speed of the rotary magnetic heads with respect to the tape will be sufficient to ensure that the recording quality of the audio signals will not be deleteriously affected by an inadequate head-to-tape speed, the reproduced audio signals are still of insufficient quality. More particularly, in the existing proposal for recording FM audio signals with the composite colour video signal in the oblique tracks on the tape, the FM audio signals recorded in the next adjacent tracks have the same carrier frequency. Therefore, each audio signal reproduced from a particular track contains a zero beat interference due to the audio component of the cross-talk from the adjacent tracks even although the level of this cross-talk may be reduced by the azimuth loss.

When the audio signals are recorded in the longitudinal tracks on the tape and also frequency-modulated and mixed with the composite colour video signal and recorded in the oblique tracks, a reproducing apparatus must detect the presence of the FM audio signals and select them for reproduction. Also, in certain instances, the FM audio signals cannot be reproduced from the composite colour video signal due to, for example, a drop-out or the like. Since the audio signals are also recorded in the longitudinal tracks, the reproducing apparatus can reproduce the audio signals therefrom in such an instance and no gap or silence will occur in the reproduced audio signal insofar as the listener or viewer is concerned.

It is important that magnetic tape having the audio signals recorded in the oblique tracks be compatible with existing video tape recording and/or reproducing apparatus which can only reproduce audio signals from the longitudinally disposed tracks. Accordingly, the audio signals must be recorded in both the longitudinal tracks and the oblique tracks, so that the tape can be used with existing video tape recording and/or reproducing apparatus and video tape recording and/or reproducing apparatus especially built to reproduce the FM audio signals.

It is sometimes desirable to perform an "audio dubbing" operation with respect to a recorded audio signal, in which an audio signal is recorded later over an existing audio signal. When the audio signals are frequency-modulated and mixed with the composite colour video signal, it is not possible to perform such a dubbing operation with such mixed signals. Thus, any audio dubbing must be performed with respect to the audio signals recorded in the longitudinal tracks on the tape.

European patent specification EP—A1—0 038 566 discloses a video and audio signal reproducing apparatus comprising audio signal processing means for reproducing an audio signal recorded in a longitudinally disposed track on a magnetic record medium, mixed signal processing means for reproducing audio signals from first and second mixed audio and video signals recorded in oblique tracks on the record medium, and detecting means for detecting a recorded identification code or signal and in dependence thereon selecting the audio signal from the oblique tracks or from the longitudinally disposed track.

According to the present invention there is provided a video and audio signal reproducing apparatus comprising:

audio signal processing means for reproducing at least one audio signal recorded in at least one longitudinally disposed track on a magnetic record medium; and

mixed signal processing means for reproducing said audio signal from first and second mixed audio and video signals recorded in first and second adjacent oblique tracks, respectively, on said magnetic record medium;
characterised by:

level detecting means for receiving at least one of said first and second mixed audio and video signals to detect the level of said one of said first and second mixed audio and video signals;

control signal producing means for generating a control signal in response to said level of said one of said first and second mixed audio and video signal detected by said level detecting means; and

automatic signal selecting means responsive to said control signal to select automatically said audio signal from said signal processing means when said audio signal is reproduced thereby and to select automatically said audio signal from said audio signal processing means at all other times.

The invention will now be described by way of example with reference to the accompanying drawings, in which:

Figure 1 is a diagram illustrating the frequency spectrum of the chrominance and luminance components of a composite video signal;

Figure 2 is a diagrammatic view of a section of magnetic tape illustrating the record tracks thereon in which video and audio signals are recorded with the frequency spectrum of Figure 1;

Figure 3 is a diagram illustrating the frequency spectrum of FM audio signals together with the chrominance and luminance components of a composite video signal and to which reference will be made in explaining the various operations of an embodiment of the invention;

Figure 4 is a diagrammatic view of a section of magnetic tape illustrating the record tracks thereon in which audio and video signals are recorded with the frequency spectrum of Figure 3;

Figure 5 (formed of Figures 5A and 5B together) is a block diagram illustrating an embodiment of audio and video signal reproducing apparatus in accordance with the invention;

Figure 6 is a diagram illustrating the frequency shift which occurs in the luminance component of a composite video signal when audio signals are frequency-modulated and mixed therewith;

Figure 7 is a view of the bottom of a cassette housing with a removable tab associated therewith which indicates when the audio signals are frequency-modulated together with the composite video signal;

Figure 8 is a cross-section of the cassette housing of Figure 7 taken along the lines 8—8, and illustrating the relationship between the removable tab and a micro-switch;

Figure 9 illustrates the operation of the micro-switch of Figure 8 when the removable tab has been removed from the cassette housing; and

Figure 10 (formed of Figures 10A and 10B together) is a block diagram illustrating an alternative embodiment of audio and video signal reproducing apparatus in accordance with the invention.

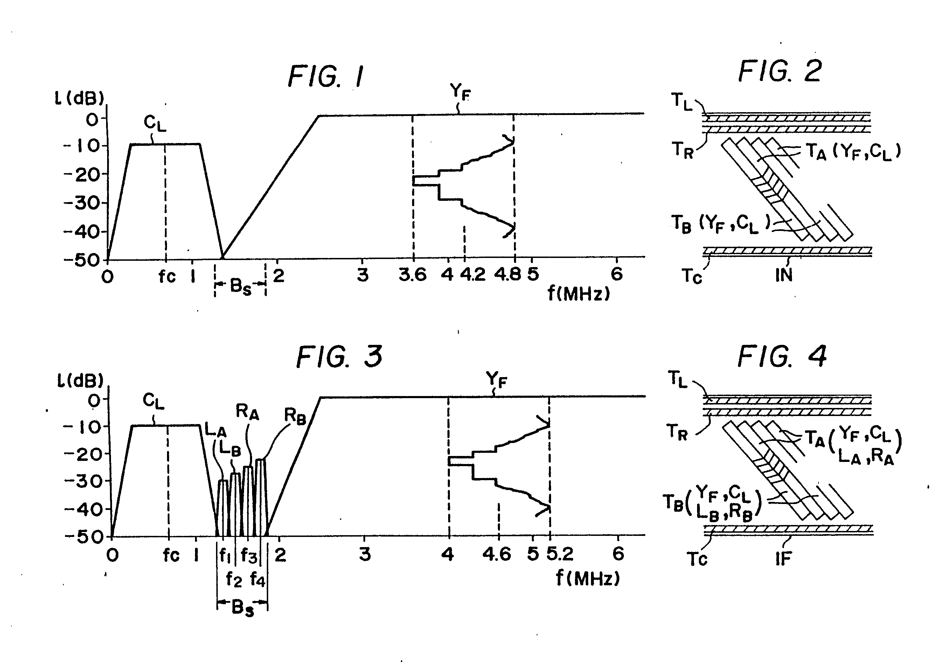

Referring to Figure 1, a composite colour video signal comprises a luminance component $Y_F$ and a chrominance component $C_L$. In prior art video signal recording apparatus, the chrominance signal $C_L$ is frequency converted and recorded about a central frequency $f_c$ on magnetic tape. The FM luminance signal $Y_F$ is recorded about a central frequency of, for example, approximately 4.2 MHz.

From Figure 1, it is seen that the level of the recorded signal within the band width $B_S$ is relatively lower than the level of the frequency converted chrominance signal $C_L$ and the FM luminance signal $Y_F$.

In Figure 2, magnetic tape 1N has recorded thereon successive oblique or slant video tracks $T_A$, $T_B$ including therein the video signals recorded by successive video heads A and B (not shown). With reference to Figure 1, the video signal recorded in the video tracks $T_A$ includes the frequency converted chrominance signal $C_L$ and the FM luminance component $Y_F$. In the prior art recording, first and second audio signals are recorded in first and second longitudinally disposed tracks $T_L$ and $T_R$ on the tape 1N. The first and second audio signals may represent the left and right stereophonic channel signals which are employed for reproducing stereophonic sound.

Control signals are also recorded in a longitudinally disposed track $T_C$ along an edge of the tape 1N opposite the audio tracks $T_L$ and $T_R$. The control signals recorded in the control track $T_C$ may include, for example, synchronizing pulses for use in reproducing the video signals recorded in the video tracks $T_A$ and $T_B$.

Figure 3 illustrates the frequency spectrum of a composite colour video signal mixed with left and right channel stereophonic signals. The left channel signal is frequency-modulated with a carrier having a frequency $f_1$, for example, of 1.325 MHz so as to provide a FM left channel signal $L_A$ having a frequency shift or deviation of the carrier of about 100 to 150 KHz. The left channel signal is then modulated with a carrier having a frequency $f_2$, for example of 1.475 MHz, which is higher than the frequency $f_1$ so as to provide another FM left channel signal $L_B$ having the same frequency shift or deviation as the first FM audio signal $L_A$, that is, a frequency deviation of about 100 to 150 KHz, but around a different central frequency. The right channel frequency is FM about a carrier having a frequency $f_3$, for example, of 1.625 MHz, higher than the frequency $f_2$, and a carrier having a frequency $f_4$, for example, of 1.775 MHz, higher than the frequency $f_3$. The frequency-modulators also provide a frequency shift width or deviation of the respective carriers of about 100 to 150 KHz and provide FM right channel signals $R_A$ and $R_B$ which have frequency shift or deviation bands different from each other and also different from the frequency shift or deviation bands of the first and second FM audio signals $L_A$ and $L_B$, respectively, as shown in Figure 3.

The levels of the FM audio signals $L_A$, $L_B$, $R_A$ and $R_B$ are suitably adjusted so as to have successively increasing values, that is, so that $L_A$ is less than $L_B$ is less than $R_A$ is less than $R_B$, as shown in Figure 3, in which the abscissa represents the frequency and the ordinate represents the level of the FM audio signals. It will be apparent that the signals $L_A$, $L_B$, $R_A$ and $R_B$ are sequentially arranged with the same difference or interval between their respective central frequencies, and with the respective frequency shift bands of the adjacent FM audio signals being very close to each other, or even slightly overlapping, so that the entire frequency band comprising the FM audio signals $L_A$, $L_B$, $R_A$ and $R_B$ is relatively narrow.

It will be seen that the frequency $f_c$ of the colour sub-carrier of the frequency-converted chrominance signal $C_L$ has a sufficiently low value, for example, 688 KHz, so that the resulting low frequency band of the chrominance signal $C_L$ will be below the band of the first FM audio signal $L_A$ having the central frequency $f_1$ of 1.325 MHz. Moreover, when the frequency-converted chrominance signal $C_L$ and the FM luminance signal $Y_F$ constituting a composite colour video signal are recorded with the FM audio signals $L_A$ and $R_A$ in the oblique tracks $T_A$, and with the FM audio signals $L_B$ and $R_B$ in the oblique tracks $T_B$, respectively, the central frequency of the carrier to be modulated by the luminance component $Y_F$ is selected, for example, to be about 4.6 MHz, and the modulation degree is selected so that, in the resulting FM luminance signal $Y_F$, the sync signal of the luminance component corresponds to a frequency of approximately 4.0 MHz, which is substantially higher than the central frequency $f_4$ of the FM audio signal $R_B$. The white peak or maximum amplitude of the luminance component corresponds to, for example, 5.2 MHz, which is higher than the frequency of the sync signal by a predetermined amount, that is, by 1.2 MHz in the example given. It will be appreciated from Figure 3 that, with such exemplary values given for the colour sub-carrier frequency $f_C$ of the frequency-converted chrominance signal $C_L$, and for the frequencies of the white peak and the sync signal of the FM luminance signal $Y_F$, the resulting composite colour video signal to be recorded in the tracks $T_A$ and $T_B$ has a gap in its spectrum between the frequency-converted chrominance signal $C_L$ and the FM luminance signal $Y_F$ for accommodating the FM audio signals $L_A$, $L_B$, $R_A$ and $R_B$.

As shown in Figure 3, the level of the frequency-converted chrominance signal $C_L$ is selected to be greater than the levels of all of the FM audio signals $L_A$, $L_B$, $R_A$ and $R_B$, and the level of the FM luminance signal $Y_F$ is selected to be greater than the level of the chrominance signal $C_L$. It will be appreciated that the sequentially arranged left FM signals $L_A$ and $L_B$ and the right FM signals $R_A$ and $R_B$ are located close to one another in the gap between the bands of the frequency-converted chrominance signals $C_L$ and the FM luminance signal $Y_F$ so as to minimise, as much as possible, the gap that needs to be provided between the chrominance and luminance signals $C_L$ and $Y_F$ of the composite video signal, and compression of the latter required for accommodating the FM audio signals $L_A$, $L_B$, $R_A$ and $R_B$.

With reference to Figure 4, non-adjacent FM audio signals are mixed with chrominance and luminance components $C_L$ and $Y_F$, respectively, and are alternately recorded in the tracks $T_A$. Corresponding, non-adjacent FM audio signals $L_B$ and $R_B$ are mixed with chrominance and luminance components $C_L$ and $Y_F$, respectively, and are alternately recorded in the tracks $T_B$. It will be appreciated that, in the embodiment, the FM audio signals recorded in each track $T_A$, that is, the left FM audio signal $L_A$ and the right FM audio signal $R_A$ do not have adjacent frequency bands. Similarly, the FM audio signals recorded in each track $T_B$, that is, the left FM audio signal $L_B$ and the right FM audio signal $R_B$ do not have adjacent frequency bands. It will also be appreciated that the FM audio signals $L_A$ and $R_A$ are recorded in each track $T_A$ by a rotary head A with an azimuth angle different from that with which the rotary head B records the FM audio signals $L_B$ and $R_B$ in each track $T_B$. Furthermore, the carrier frequencies $f_1$ and $f_3$ and the carrier frequencies $f_2$ and $f_4$ of the FM audio signal recorded in the adjacent tracks $T_A$ and $T_B$, respectively, do not coincide.

At the same time that the FM audio signals are being recorded with the composite colour video signal in the oblique tracks $T_A$ and $T_B$ by means of the rotary heads A and B (not shown), the video and audio signal recording apparatus may also record the left and right channel signals in the longitudinal tracks $T_L$ and $T_R$ by means of fixed heads (not shown) so that a tape 1F thus recorded

can be played back or is compatible with a conventional VTR in which only fixed heads are provided for reproducing the recorded audio signals.

In respect of the FM audio signals recorded with the frequency-converted chrominance signal $C_L$ and the FM luminance signal $Y_F$ by the rotary magnetic heads in the oblique tracks $T_A$ and $T_B$, it will be appreciated that, since the relative speed of the rotary heads with respect to the tape 1F is selected to be sufficiently high for recording the video signal, such high relative speed ensures high quality recording of the audio signals, such as the stereophonic left channel signal and right channel signal, while using a narrow frequency band for the corresponding FM audio signals $L_A$, $L_B$, $R_A$ and $R_B$ for preventing suppression of the frequency band of the composite colour video signal.

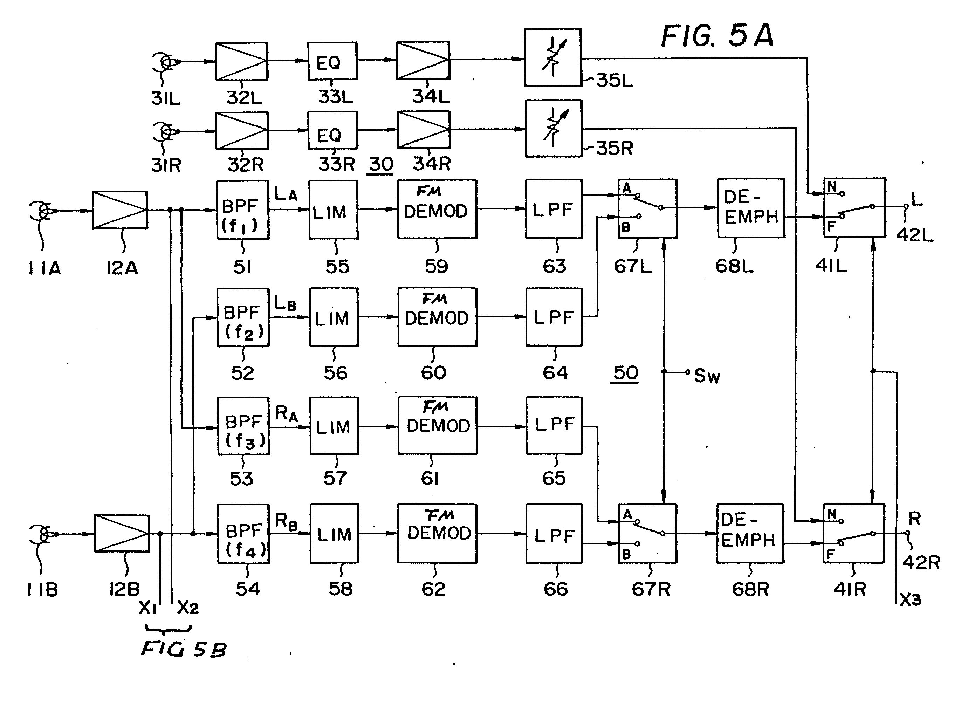

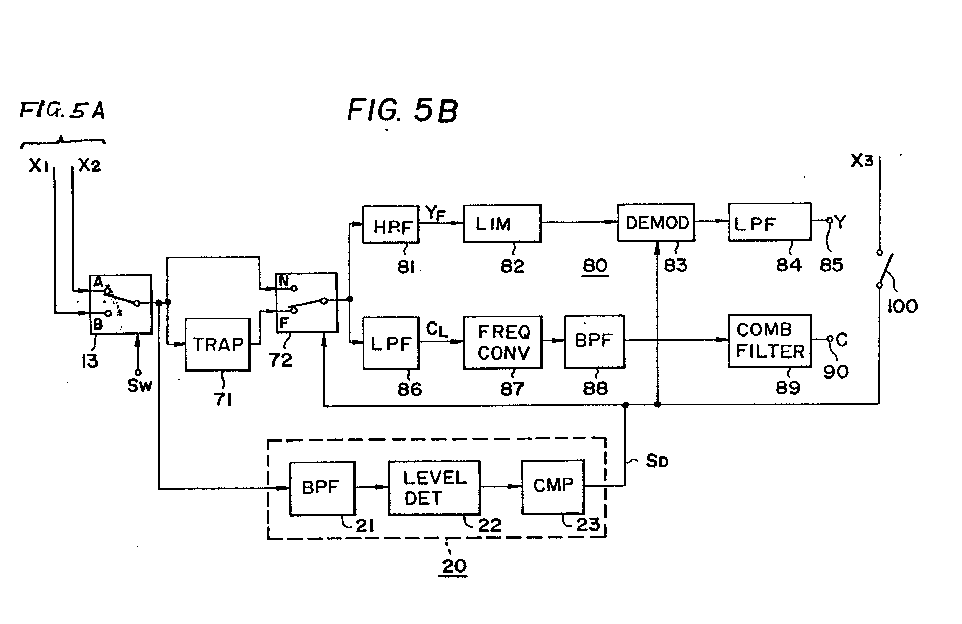

Figure 5 illustrates an embodiment of video and audio signal reproducing apparatus in accordance with the invention and is shown to include rotary magnetic heads 11A and 11B which are operative alternately to scan the oblique tracks $T_A$ and $T_B$ formed on the magnetic tape 1F by a suitable recording apparatus. The movements of the heads 11A and 11B are suitably controlled, for example, by a known servo system (not shown), so that, during one field, the head 11A scans a track $T_A$ and, during the next field, the other head 11B scans an adjacent track $T_B$. Since the head 11A has an azimuth angle corresponding to that of a magnetic head with which a mixed audio and video signal was recorded in the track $T_A$, and the head 11B has an azimuth angle corresponding to that of a magnetic head with which a mixed audio and video signal was recorded in the track $T_B$, the head 11A mainly reproduces the first mixed signal from the scanned track $T_A$ and the second mixed signal is mixed therewith only as a cross-talk component from the adjacent tracks $T_B$. On the other hand, the head 11B mainly reproduces the second mixed signal from the track $T_B$ being scanned, while the first mixed signal is mixed therewith only as the cross-talk component from the adjacent tracks $T_A$. The output signals from the head 11A and 11B are respectively supplied through reproducing amplifiers 12A and 12B to a mixed signal processing circuit 50 and through a switch 13 to a video signal processing circuit 80 which is effective to separate the frequency-converted chrominance signal $C_L$ and the FM luminance signal $Y_F$ from each of the mixed signals and then to reconvert the chrominance signal to its original frequency band and to demodulate the FM luminance signal. The switch 13 is actuated in response to a switch control signal $S_W$ which can be supplied in response to control signals recorded in the control track $T_C$.

Of course, if the chrominance signal has been recorded with different first and second carriers in the adjacent tracks $T_A$ and $T_B$, for example, as disclosed in US Patents Nos. 4 007 482 and 4 007 484, then the video signal processing circuit 80 may be arranged as shown in either of those patents for suppressing or eliminating the low frequency band of cross-talk between the tracks $T_A$ and $T_B$ by reason of the different frequency and/or polarity or phase characteristics of the respective carriers.

The output signal of the head 11A, as obtained from the reproducing amplifier 12A, is also supplied to band-pass filters 51 and 53 which respectively pass therethrough the left FM signal $L_A$ and the right FM signal $R_A$. Although the left FM signal $L_A$ and the right FM signal $R_A$ in the output signal from the head 11A are reproduced from the same track $T_A$, the frequency bands of the signals $L_A$ and $R_A$ are spaced from each other, that is, are not immediately adjacent, as is apparent from Figure 3, so that the FM audio signals $L_A$ and $R_A$ can be satisfactorily separated from each other by the band-pass filters 51 and 53. Thus, the band-pass filters 51 and 53 supply the left FM signal $L_A$ and the right FM signal $R_A$, respectively, without mixing therewith any substantial cross-talk component of the other. Similarly, the output signal of the head 11B, as obtained from the reproducing amplifier 12B, is supplied to the band-pass filters 52 and 54 which respectively permit the left FM signal $L_B$ and the right FM signal $R_B$ to pass therethrough. Although the FM audio signals $L_B$ and $R_B$ in the output signal from the head 11B are also reproduced from the same track $T_B$, their frequency bands are also spaced from each other, as shown in Figure 3, and such signals can be effectively separated from each other by the band-pass filters 52 and 54. Thus, the band-pass filters 52 and 54 provide, at their outputs, the left FM signals $L_B$ and the right FM signal $R_B$, respectively, with each such signal being substantially free of any cross-talk component from the other.

The left FM signals $L_A$ and $L_B$ and the right FM signals $R_A$ and $R_B$ obtained from the band-pass filters 51 and 52 and the band-pass filters 53 and 54, respectively, are supplied through amplitude limiters 55, 56, 57 and 58, respectively, to corresponding frequency demodulators 59, 60, 61 and 62. It will be appreciated that, during the reproduction of the fields of the video signal recorded in the tracks $T_A$, portions of the demodulated and reproduced left and right channel signals, respectively, appear at the outputs of the demodulators 59 and 61, respectively. On the other hand, during the reproduction of fields of the video signal recorded in the tracks $T_B$, portions of the demodulated and reproduced left and right channel signals, respectively, appear at the outputs of the frequency demodulators 59 and 62. Such output signals of the frequency demodulators 59 and 62 are passed through low-pass filters 63, 64, 65 and 66, respectively, which are each designed to pass the audio signal band. The purpose of the low-pass filters 63 to 66 is to remove from the audio signals supplied thereto any beat noises that may occur in the output signals of the frequency demodulators 59 and 62 due to the existence of cross-talk components in the signals reproduced by the heads 11A and 11B.

More particularly, each of the left FM signals $L_A$ and $L_B$ and the right FM signals $R_A$ and $R_B$ derived from the band-pass filters 51 and 54, respectively, may contain cross-talk components of an FM audio signal reproduced from the adjacent tracks and having a frequency band which is close to that of the main FM audio signal being passed through the respective one of the filters 51 to 54. In other words, the left FM signal $L_A$ passed through the band-pass filter 51, as a main signal, may also contain, as a cross-talk component, the left FM signal $L_B$; the left FM signal $L_B$ passed through the band-pass filter 52, as a main signal, may also contain, as cross-talk components, the left FM signal $L_A$ and the right FM signal $R_A$; the right FM signal $R_A$ passed, as a main signal, through the band-pass filter 53 may also contain, as cross-talk components, the left FM signal $L_B$ and the right FM signal $R_B$; and the right FM signal $R_B$ passed, as a main signal, through the band-pass filter 54 may also contain, as a cross-talk component, the right FM signal $R_A$. However, since such cross-talk components from the adjacent tracks have the levels thereof reduced by the reproduction azimuth losses, and further, since the cross-talk components supplied, along with respective main signals, to the band-pass filter 51 to 54 have frequency bands which are not coincident with the frequency pass bands of the respective band-pass filters, the levels of the cross-talk components, as supplied to the frequency demodulators 59 to 62, are quite low for reducing the influences of such cross-talk components. However, even such low level cross-talk components, when mixed in the signals supplied to the inputs of the frequency demodulators 59 to 62, cause beating to occur between the main channel signals and the cross-talk components and, accordingly, beat noises are produced in the output signals from the frequency demodulators 59 to 62. However, the carrier frequencies $f_1$, $f_2$, $f_3$ and $f_4$ of the FM audio signals $L_A$, $L_B$, $R_A$ and $R_B$, respectively, have been selected so that the difference between the adjacent carrier frequencies, for example, 150 KHz, and hence the frequency of the described beat noise, will be outside the reproduced audio signal band passed by the low-pass filters 63 to 66. Thus, any beat noises appearing at the outputs of the frequency demodulators 59 to 62 are removed by the filters 63 to 66, respectively.

In view of the above portions of the reproduced left channel signal, without any components of the right channel signal or any beat noise mixed therewith, are provided at the outputs of the low-pass filters 63 and 64 in alternating fields of the video signal. Similarly, portions of the reproduced right channel signal, without any components of the left channel signal or any beat noise mixed therewith, are provided at the outputs of the low-pass filters 65 and 66 during alternating fields of the reproduced video signal.

The portions of the reproduced left channel signal obtained from the low-pass filters 63 and 64, as described above, are alternately passed through a switch circuit 67L which is changed over at each video field period in response to a control signal reproduced by a fixed head (not shown) from the control track $T_C$ on the tape 1F and being supplied as the switch control signal $S_W$ to the switch circuit 67L. Thus, a continuous reproduced left channel signal is obtained from the output of the switch circuit 67L. Similarly, the portions of the right channel signal obtained from the low-pass filters 65 and 66 in alternating fields of the video signal are alternately passed through a switch circuit 67R under the control of the switch control signal $S_W$ so that a continuous reproduced right channel signal is obtained at the output of the switch circuit 67R. Such continuous or successive reproduced left and right channel signals obtained from the outputs of the switch circuits 67L and 67R are passed through de-emphasis circuits 68L and 68R, respectively, which are complementary to pre-emphasis circuits in the recording apparatus (not shown) and include low-pass filters (also not shown). The resulting left and right channel audio output signals are supplied to terminals F of switching circuits 41L and 41R, respectively, and thence, to audio output terminal 42L and 42R. The switching circuits 41L and 41R are provided for selectively supplying to the respective audio output terminals 42L and 42R either the reproduced continuous or successive left and right channel signals from the tracks $T_A$ and $T_B$ as reproduced by the heads 11A and 11B, or the left and right channel signals reproduced by fixed heads 31L and 31R from the conventional longitudinal audio tracks $T_L$ and $T_R$ on the tape 1F and which are supplied to terminals N of the switching circuits 41L and 41R from a conventional audio signal processing circuit 30, to be described more fully below.

The audio signal processing circuit 30 includes the fixed audio reproducing heads 31L and 31R for reproducing conventionally recorded left and right stereophonic channel signals in the tracks $T_L$ and $T_R$ on the tape 1F. The output signals from the fixed heads 31L and 31R are respectively supplied to amplifiers 32L and 32R, equalizing circuits 33L and 33R (complementary to pre-emphasis circuits in the recording apparatus (not shown)), second amplifiers 34L and 34R, and variable gain control circuits 35L and 35R. The output signals from the variable gain control circuits 35L and 35R are respectively supplied to the terminals N of the switch circuits 41L and 41R, as described before.

It will be seen that the switch circuits 67L and 67R are located after the frequency demodulators 59 and 60 and the frequency demodulators 61 and 62, respectively. Thus, the switch circuits 67L and 67R act to combine successive portions of the demodulated, relatively low frequency signals. Such relatively low frequency or audio signals can be combined relatively easily without large junction errors. However, even if such junction errors do occur, due to, for example, an angular deviation from the desired diametrically opposed relation of the heads 11A and 11B and a corresponding phase difference between the demodulated signal portions, each such junction error involves an abrupt or high frequency change in the combined signal and thus is substantially eliminated by the previously mentioned low-pass filter conventionally included in the de-emphasis circuit 68L and 68R. Accordingly, even if there is a junction error, for example, in the combined signal from the switch circuit 67L, the corresponding combined signal derived from the de-emphasis circuit 68L will be substantially smoothed at the location of the junction error.

It will be appreciated from the foregoing that the recording and reproducing of video and audio signals is compatible with the high density recording of the video signal, for example, by using any of the techniques disclosed in US Patents Nos 4 007 482 and 4 007 484, and that, by employing the rotary magnetic heads for recording and reproducing the frequency modulated audio signals together with the video signal, the high quality recording and reproducing of the audio signal is ensured. More particularly, the recording and reproducing of the audio signal overcomes a problem encountered with the audio reproduction in a conventional VTR when it is operated in its slow-motion or other so-called "stunt" mode. In the conventional VTR in which the audio signals are recorded only in the longitudinal tracks $T_L$ and $T_R$ extending along the tape 1N and are reproduced by fixed heads, the head-to-tape speed is very substantially reduced in the slow-motion reproducing mode, with the result that the frequencies of the reproduced audio are drastically altered and the audio becomes substantially unintelligible. On the other hand, in embodiments of the invention, since the FM audio signals are recorded in the tracks $T_A$ and $T_B$ with the video signal and are reproduced by the heads 11A and 11B, the reduction in the tape speed for the slow-motion mode changes the rate at which recorded words are uttered, but does not substantially change the head-to-tape speed for the heads 11A and 11B so that the frequencies of the reproduced audio are not substantially changed and the relatively slowly uttered words or sounds thereof can still be understood.

It will also be seen that, since the left and right channel audio signals are converted into the narrow band frequency-modulated signals $L_A$, $L_B$, $R_A$ and $R_B$ for recording, only a relatively narrow frequency band is required for such FM audio signals and the band of the video signal is not significantly suppressed. Further, as previously described, during reproduction, the left and right channel signals are reproduced with sufficient separation therebetween and with any cross-talk interference from adjacent tracks being eliminated or at least considerably reduced.

Furthermore, since the described embodiment of the invention includes the fixed heads 31L and 31R for reproducing the audio signals in the conventional longitudinal tracks $T_A$ and $T_B$ on the tape 1F, any tape on which video and audio signals have been recorded can be played back in a conventional video and audio signal reproducing apparatus having fixed audio reproducing heads.

The output signals from the amplifiers 12A and 12B are supplied to the switch circuit 13 (Fig. 5B) and thence, to a second switch circuit 72. When the FM audio signals are mixed with the video signals, the signals from the switch circuit 13 are supplied through a trap circuit 71 to a terminal F of the switch circuit 72. The trap circuit 71 substantially eliminates the FM audio signals when they are present in the reproduced signals from the reproducing amplifiers 12A and 12B. The reproduced signals from the reproducing amplifiers 12A and 12B are also supplied to a terminal N of the switching circuit 72. Thus, the switch circuit 72 is switched to the terminal N to supply a video signal to the video signal processing circuit 80 when the FM audio signals are not mixed with the video signal, and is switched to the terminal F when the FM audio signals are mixed with the video signal. The switch circuit 72 is actuated in response to a switch control signal $S_D$ provided from a recording condition detector circuit 20, and more fully described hereinbelow.

The video signal processing circuit 80 includes a high-pass filter 81 for eliminating the chrominance signal component $C_L$ from the video signal supplied thereto. The luminance signal $Y_F$ thus supplied to a limiting circuit 82 and thence, to a frequency demodulator 83. The frequency demodulator 83 demodulates the luminance signal $Y_F$ in accordance with control signals supplied from the recording condition detector circuit 20, more fully described below, and varies the central frequency about which the luminance signal $Y_F$ is supplied from the FM demodulator 83 to a low-pass filter 84 and thence, to a luminance signal output terminal 85.

The signal from the switch circuit 72 is also supplied to a low-pass filter 86 which removes the luminance signal component $Y_F$ from the reproduced video signal and accordingly supplies the chrominance signal component signal $C_L$ to a frequency converting circuit 87. The frequency converting circuit 87 converts the frequency of the chrominance signal component signal $C_L$ to its original frequency and supplies a corresponding signal to a band-pass filter 88. The output signal from the band-pass filter 88 is supplied to a comb filter 89. The chrominance signal from the comb filter 89 is supplied to a chrominance signal output terminal 90.

The recording condition detector circuit 20 receives the output signal from the switch circuit 13 and determines whether the reproduced signal from the heads 11A and 11B includes the audio and video signals mixed together. The output signal from the switch circuit 13 is supplied to a band-pass filter 21 which passes only the frequency band $B_S$ (see Figure 3), that is, substantially only the frequency band within which the FM audio signals are carried. The filtered signal is then supplied to a level detecting circuit 22 which determines the level of the frequency band supplied thereto. It is to be appreciated from Figures 1 and 3 that the level of the frequency band $B_S$ is substantially lower when the FM audio signals are not mixed with the video signals than when the FM audio signals are mixed with the video signals. The recording condition detector circuit 20 utilizes this fact to generate a control signal $S_D$ which is supplied to the switch circuit 72, the frequency demodulator 83, and the switch circuits 41L and 41R to select the appropriate audio signals from the audio signal processing circuit 30 and the mixed signal processing circuit 50. The detected level signal from the level detecting circuit 22 is supplied to a comparator 23 which compares the detected level with a reference value. When the detected level exceeds the reference value, the control signal $S_D$ is generated in response thereto.

It is to be appreciated that the circuit of Figure 5 will automatically identify whether the FM audio signals are mixed with the video signals and select the FM audio signals for reproduction from the mixed signals. If the audio signals are not mixed with the video signals, the circuit of Figure 5 will select the audio signals from the audio signal processing circuit 30 and derives the audio signals from the fixed heads 31L and 31R.

It is sometimes desirable to change the audio signals recorded on the magnetic tape subsequent to the recording of the video signals thereon. This is referred to as "audio dubbing". When the audio signals are mixed with the video signals and recorded on the magnetic tape, it is not practical to re-record over or otherwise replace the audio signals in the oblique tracks. Accordingly, it is necessary to record in the longitudinal tracks $T_L$ and $T_R$ when an audio dubbing operation is to be performed. When the magnetic tape includes such audio dubbed signals, it is necessary to disable the switching operation actuated by the control signal $S_D$ from the recording condition detector circuit 20. Otherwise, the reproducing apparatus selects the audio signals mixed with the video signals. Thus, an audio dubbing switch 100 is interposed between the recording condition detector circuit 20 and the switch circuits 41L and 41R so that the control signal $S_D$ is not supplied to actuate the switch circuits 41L and 41R. If the switch circuits 41L and 41R are designed whereby they are switched to the terminals N when the control signal $S_D$ is not supplied thereto, the audio signals reproduced by the audio signal processing circuit 30 will be supplied to the audio output terminals 42L and 42R. It is to be appreciated that the control signal $S_D$ must be supplied to the frequency demodulator 83 even when an audio dubbing operation has been performed so that the central frequency about which the luminance component signal $Y_F$ is modulated can be changed accordingly.

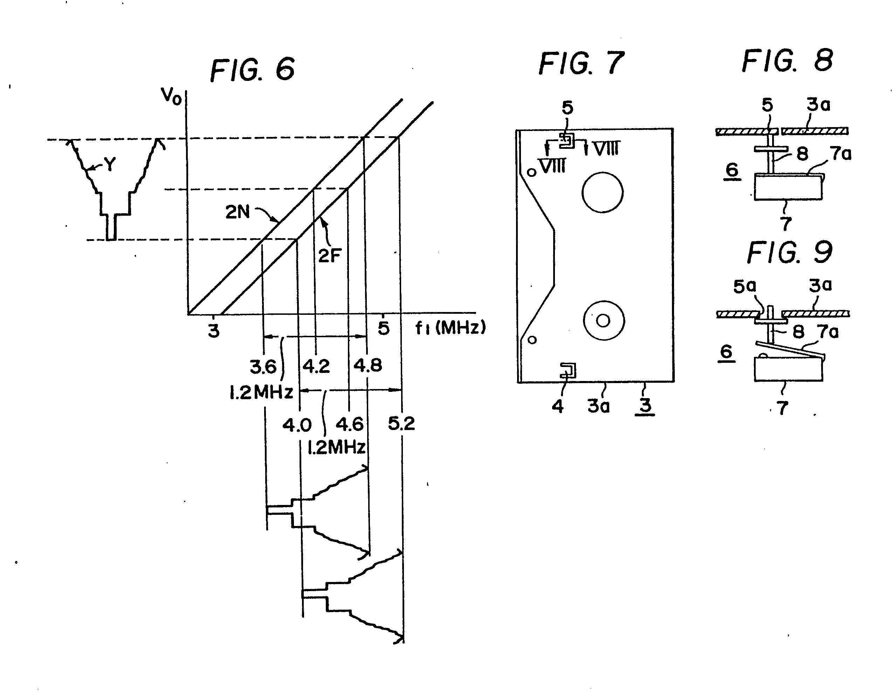

Figure 6 diagrammatically illustrates the shift in the central frequency of the luminance component signal $Y_F$ between the normal recording mode and the special recording mode in which the audio signals are mixed with the video signals for recording together. In the normal recording mode the central frequency is approximately 4.2 MHz, while in the special recording mode, the central frequency is shifted approximately 0.4 MHz to 4.6 MHz. In both cases, the band width is approximately 1.2 MHz.

Figure 7 illustrates a cassette housing 3 which contains magnetic tape. The cassette housing 3 has a lower surface 3a which has formed therein removable tabs 4 and 5. The tab 4 is provided, as is known, to indicate whether the tape can be erased or not erased, and is sometimes referred to as an erase protector.

The second removable tab 5 indicates whether the tape in the cassette housing 3 is recorded in the normal or in the special recording mode. For example, the tab 5 can be removed to indicate that the tape is recorded in the special recording mode in which the audio and video signals are mixed together.

Figures 8 and 9 illustrate the interaction of the tab 5 and a micro-switch 7 in order to indicate whether the tape is recorded in the normal or in the special recording mode. The micro-swtch 7 includes a portion 7a which is normally upwardly biased by, for example, a spring. The portion 7a coacts with an upstanding pin 8 which contacts the tab 5. When the tab 5 is present in the cassette housing 3, as, for example, indicated in Figure 8, the micro-switch 7 is placed in one state to indicate the recording mode of the tape in the cassette housing 3. As illustrated in Figure 9, when the tab 5 is removed, the portion 7a is placed in a second state to indicate through the micro-switch 7 the alternative recording mode.

Accordingly, when a video cassette constructed as shown in Figure 7 is inserted in an audio and video signal reproducing apparatus, the condition of the tab 5 indicates whether the tape is recorded in the normal or in the special recording mode. The micro-switch 7 can, for example, actuate a circuit to select the source of the audio signals from either the fixed heads or the rotary heads.

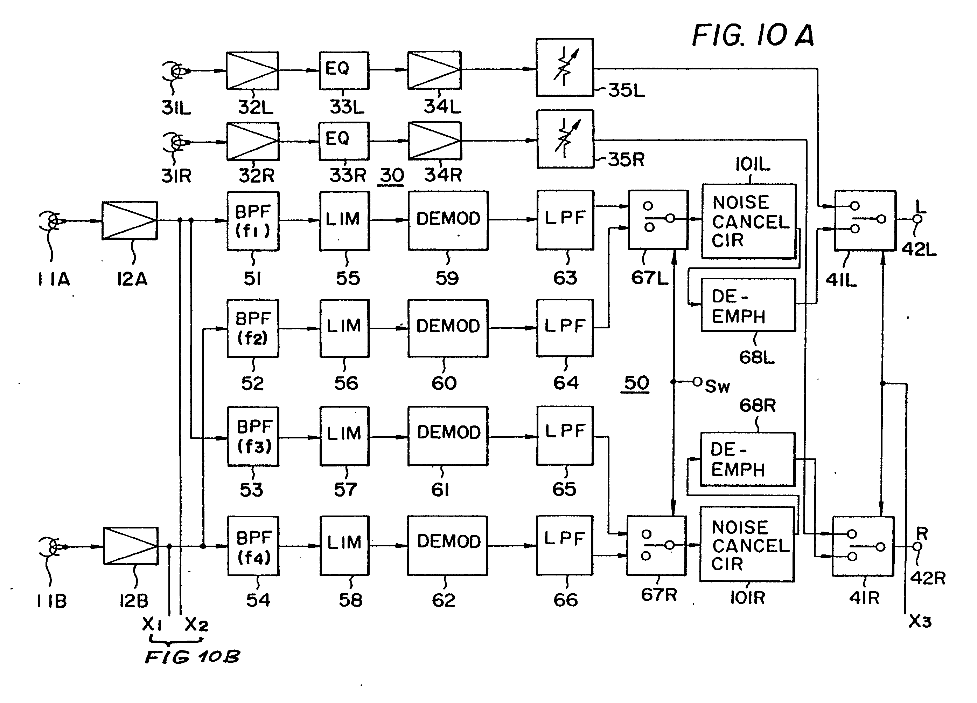

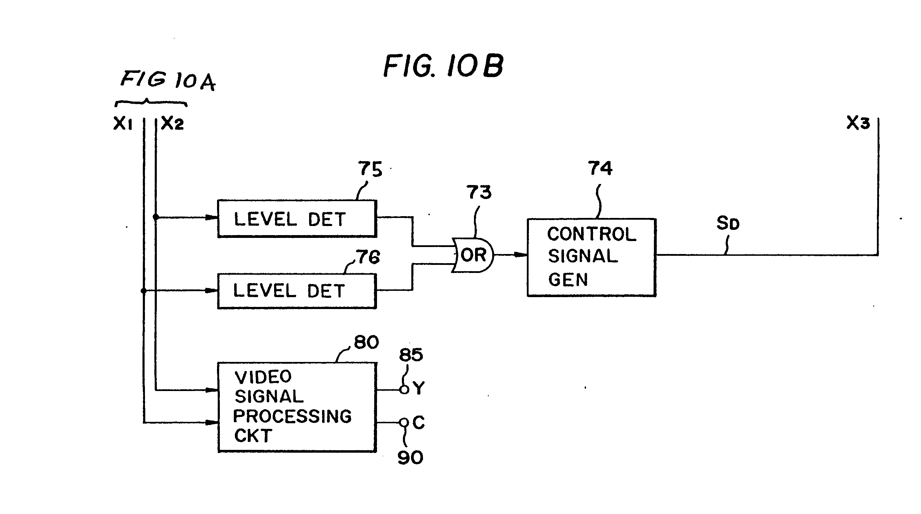

Figure 10 illustrates an alternative embodiment of the invention in which similar parts described previously with respect to the other embodiments operate as aforesaid and are not described again. It is to be appreciated that the mixed signal reproducing circuit 50 includes noise cancelling circuits 100L and 100R interposed between the switching circuits 67L and 67R and the de-emphasizing circuits 68L and 68R, respectively.

In the embodiment of Figure 10B, a pair of level detectors 75 and 76 receive the output signals from the amplifiers 12A and 12B, respectively, and generate an output signal in response thereto. The output signals from the level detectors 75 and 76 are supplied to an OR gate 73 which generates an output signal in response to the input signals. The output signal from the OR gate 73 is supplied to a control signal generator 74 which generates the output signal $S_D$ to actuate the switching circuits 41L and 41R, as aforesaid. The output signals from the amplifiers 12A and 12B are also supplied to the video signal processing circuit 80 which supplies luminance and chrominance signals, respectively, to the luminance and chrominance output terminals 85 and 90.

In the embodiment of Figure 10, when a drop-out of the audio signal mixed with the video signal is detected by the level detectors 75 and 76, the control signal generator 74 generates the control signal $S_D$ in response thereto to actuate the switching circuits 41L and 41R and reproduce the audio signals from the audio signal processing circuit 30. Accordingly, even if a drop-out occurs, the audio signal is continuously reproduced.

It is to be appreciated that a VTR in accordance with the foregoing description can utilize a video tape recording for a conventional VTR since it can reproduce audio signals from both the longitudinal tracks and the oblique tracks, and will automatically select the audio signals recorded in the longitudinal tracks if the audio signals are not recorded in the slant tracks. Moreover, such a VTR permits "audio dubbing" of video tape recordings where the audio signals are recorded in the oblique tracks.

**Claims**

1. A video and audio signal reproducing apparatus comprising:

audio signal processing means (30) for reproducing at least one audio signal recorded in at least one longitudinally disposed track $(T_L, T_R)$ on a magnetic record medium (1F); and

mixed signal processing means (50) for reproducing said audio signal from first and second mixed audio and video signals recorded in first and second adjacent oblique tracks $(T_A, T_B)$, respectively, on said magnetic record medium (1F);

characterised by:

level detecting means (22; 75, 76) for receiving at least one of said first and second mixed audio and video signals to detect the level of said one of said first and second mixed audio and video signals;

control signal producing means (23; 74) for generating a control signal in response to said level of said one of said first and second mixed audio and video signal detected by said level detecting means (22; 75, 76); and

automatic signal selecting means (41L, 41R) responsive to said control signal to select automatically said audio signal from said signal processing means (50) when said audio signal is reproduced thereby and to select automatically said audio signal from said audio signal processing means (30) at all other times.

2. Apparatus according to claim 1 wherein at least portions of said first and second video signals are frequency modulated about a first central frequency when said at least one audio signal is mixed therewith and are frequency modulated about a second central frequency at all other times; and said apparatus further comprises video signal processing means (80) for receiving said control signals from said level detecting means (22; 75, 76) and for demodulating said first and second video signals in response thereto.

3. Apparatus according to claim 1 wherein said audio signal is a frequency-modulated signal which occupies a frequency band in said first and second mixed audio and video signals; and wherein said level detecting means (22) includes:

band-pass filter means (21) for passing substantially only said frequency band of said audio signal;

level detecting means (22) for detecting the level of said frequency band; and

comparator means (23) for comparing said level of said frequency band with a predetermined level to identify when said audio signal is mixed with said first and second video signals.

4. Apparatus according to claim 1 wherein said level detecting means (75, 76) includes first and second level detectors (75, 76) for respectively detecting the levels of said first and second mixed audio and video signals.

5. Apparatus according to claim 4 wherein said level detecting means (75, 76) further includes:

OR gate means (73) connected to said first and second level detectors (75, 76) and generating an audio indicator signal in response to output signals therefrom; and

control signal generating means (74) for receiving said audio indicator signal and generating control signals to select said audio signal from said audio signal processing means (30).

6. Apparatus according to claim 1 wherein said magnetic record medium (1F) is positioned in a housing (3) having an indicator portion (5) for indicating whether said audio signal is mixed with said first and second video signals, and wherein further detecting means (7) cooperates with said indicator portion (5) to select said audio signal from said mixed signal processing means (50).

7. Apparatus according to claim 6 wherein said further detecting means (7) includes switch means (7) for coating with a removable tab (5) which forms said indicator portion of said housing (3).

8. Apparatus according to claim 1 wherein two audio signals comprising left and right stereophonic channel signals are recorded in respective longitudinally disposed tracks ($T_L$, $T_R$) on said magnetic record medium (1F); and wherein said left and right stereophonic channel signals are frequency modulated by first, second, third, and fourth carriers ($f_1$, $f_2$, $f_3$, $f_4$) to provide first, second, third and fourth FM audio signals, said first and second FM audio signals being mixed with said first video signal to provide said first mixed audio and video signal and said third and fourth FM audio signals being mixed with said second video signal to provide said second mixed audio and video signal; and wherein said level detecting means (22; 75, 76) detects when said left and right stereophonic channel signals are included in said signals recorded in said oblique tracks ($T_A$, $T_B$) on said magnetic record medium (1F) and selects said left and right stereophonic channel signals from said mixed signal processing means (50) and selects said left and right stereophonic channel signals from said audio signal processing means (30) at all other times.

9. Apparatus according to claim 8 wherein said level detecting means (75, 76) comprises:

band-pass filter means (21) for passing substantially only the frequency band of said first, second, third and fourth FM audio signals;

level detecting means (22) for determining the level of said frequency band; and

comparing means (23) for comparing said level of said frequency band with a predetermined level and generating in response thereto control signals to select said left and right stereophonic channel signals from one of said audio signal processing means (30) and said mixed signal processing means (50).

10. Apparatus according to claim 8 wherein said level detecting means (22) comprises:

first and second level detecting means (75, 76) each associated with one of said first and second mixed audio and video signals for detecting the level thereof; and

means (73, 74) connected to said first and second level detecting means for generating control signals in response to said levels of said first and second mixed audio and video signals and selecting said left and right stereophonic channel signals from one of said audio signal processing means (30) and said mixed signal processing means (50).

11. Apparatus according to claim 10 wherein said control signal processing means (74) comprises:

OR gate means (73) for receiving output signals from said first and second level detecting means (75, 76) corresponding to said levels of said first and second mixed audio and video signals and generating output signals in response thereto; and

control signal generating means (74) for receiving said output signals from said OR gate means (73) and generating said control signals in response thereto.

12. Apparatus according to claim 8 wherein said magnetic record medium (1F) is contained in a cassette housing (3), and wherein further detecting means (7) coacts with a portion of said cassette housing (3) to select said left and right stereophonic channel signals from one of said audio signal processing means (30) and said mixed signal processing means (50).

**Patentansprüche**

1. Gerät zur Wiedergabe von Video- und Audiosignalen

mit einem Audiosignalprozessor (30) für die Wiedergabe wenigstens eines Audiosignals, das in wenigstens einer Längsspur ($T_L$, $T_R$) eines magnetischen Aufzeichnungsmediums (1F) aufgenommen ist,

sowie mit einem Signalgemischprozessor (50) für die Wiedergabe des genannten Audiosignals aus einem ersten und einem zweiten Audio-Videosignalgemisch, die in benachbarten ersten bzw. zweiten Schrägspuren ($T_A$, $T_B$) des magnetischen Aufzeichnungsmediums (1F) aufgenommen sind,

gekennzeichnet durch

eine Pegeldetektoreinrichtung (22; 75, 76), der das erste und das zweite Audio-Videosignalgemisch oder wenigstens eines dieser beiden Signalgemische zuführbar sind, und die deren bzw. dessen Pegel feststellt,

eine Einrichtung (23; 74) zur Erzeugung eines Steuersignals in Abhängigkeit von dem von der Pegeldetektoreinrichtung (22, 75, 76) festgestellten Pegel des ersten und/oder des zweiten Audio-Videosignalgemischs,

sowie eine Einrichtung (41L, 41R) für die automatische Signalauswahl, die in Abhängigkeit von dem genannten Steuersignal automatisch das Audiosignal des Signalgemischprozessors (50) auswählt, wenn dieser das Audiosignal wiedergibt, zu allen anderen Zeiten hingegen automatisch das Audiosignal des Audiosignalprozessors (30) auswählt.

2. Gerät zur Wiedergabe von Video- und Audiosignalen nach Anspruch 1, bei dem wenigstens Teile des ersten und des zweiten Videosignals dann, wenn das wenigstens eine Audiosignal mit ihm gemischt ist, um eine erste Mittenfrequenz und zu allen anderen Zeiten um eine zweite Mittenfrequenz frequenzmoduliert ist,

und das ferner einen Videosignalprozessor (80) umfaßt, dem die Steuersignale der genannten Pegeldetektoreinrichtung (22; 75, 76) zuführbar sind und der das erste und das zweite Videosignal in Abhängigkeit von diesen Steuersignalen demoduliert.

3. Gerät zur Wiedergabe von Video- und Audiosignalen nach Anspruch 1, bei dem das Audiosignal ein frequenzmoduliertes Signal ist, das ein Frequenzband in dem ersten und dem zweiten Audio-Videosignalgemisch besetzt,

und bei dem die Pegeldetektoreinrichtung (22) folgende Teile umfaßt:

— einen Bandpaß (21), der im wesentlichen nur für das genannte Frequenzband des Audiosignals durchlässig ist,

— eine Pegeldetektoreinrichtung (22) zur Pegelbestimmung in diesem Frequenzband sowie

— eine Vergleichereinrichtung (23) zum Vergleich des Pegels in dem genannten Frequenzbands mit einem vorgegebenen Pegel für die Feststellung, ob das Audiosignal mit dem ersten und dem zweiten Videosignal gemischt ist.

4. Gerät zur Wiedergabe von Video- und Audiosignalen nach Anspruch 1, bei dem die Pegeldetektoreinrichtung (75, 76) einen ersten und einen zweiten Pegeldetektor (75, 76) zur Bestimmung des Pegels des ersten bzw. des zweiten Audio- und Videosignalgemischs umfaßt.

5. Gerät zur Wiedergabe von Video- und Audiosignalen nach Anspruch 1, bei dem die Pegeldetektoreinrichtung (75, 76) ferner folgende Teile umfaßt:

ein mit dem ersten und dem zweiten Pegeldetektor (75, 76) verbundenes ODER-Glied (73), das in Abhängigkeit von deren Ausgangssignalen ein Audio-Indikatorsignal abgibt, sowie

eine Steuersignal-Generatoreinrichtung (74), dem das Audio-Indikatorsignal zuführbar ist und das ein Steuersignal für die Auswahl des Audiosignals des Audiosignalprozessors (30) erzeugt.

6. Gerät zur Wiedergabe von Video- und Audiosignalen nach Anspruch 1,

bei dem das magnetische Aufzeichnungsmedium (1F) in einem Gehäuse (3) angeordnet ist, an dem ein Indikator (5) angebracht ist, der angibt, ob das Audiosignal mit dem ersten und dem zweiten Videosignal gemischt ist,

und bei dem eine weitere Detektoreinrichtung (7) vorgesehen ist, die mit dem genannten Indikator (5) zusammenwirkt, um das Audiosignal des Signalgemischprozessors (50) auszuwählen.

7. Gerät zur Wiedergabe von Video- und Audiosignalen nach Anspruch 1, bei dem die weitere Detektoreinrichtung (5) einen Schalter (7) beinhaltet, der mit einem entfernbaren Ansatz (5) zusammenwirkt, der den an dem Gehäuse (3) angebrachten Indikator bildet.

8. Gerät zur Wiedergabe von Video- und Audiosignalen nach Anspruch 1,

bei dem zwei Audiosignale, die reche und linke Stereokanalsignale beinhalten, in entsprechenden Längsspuren ($T_L$, $T_R$) auf dem magnetischen Aufzeichnungsmediums (1F) aufgenommen sind,

und bei dem das rechte und das linke Stereokanalsignal zur Bildung eines ersten, eines zweiten, eines dritten und eines vierten FM-Audiosignals mit ersten, zweiten, dritten und vierten Trägern ($f_1$, $f_2$, $f_3$, $f_4$) frequenzmoduliert sind,

wobei das erste und das zweite FM-Audiosignal zur Gewinnung des ersten Audio-Videosignalgemischs mit dem ersten Videosignal gemischt sind und das dritte und vierte FM-Audiosignal zur Gewinnung des zweiten Audio- und Videosignalgemischs mit dem zweiten Videosignal gemischt sind,

und wobei die Pegeldetektoreinrichtung (22; 75, 76) feststellt, ob das erste und das zweite Stereokanalsignal in dem in den Schrägspuren ($T_A$, $T_B$) des magnetischen Aufzeichnungsmediums (1F) aufgenommenen Signale enthalten sind, und in diesem Fall das linke und rechte Stereokanalsignal des Signalgemischprozessors (50), zu allen anderen Zeiten hingegen das linke und das rechte Stereokanalsignal des Audiosignalprozessors (30) auswählt.

9. Gerät zur Wiedergabe von Video- und Audiosignalen nach Anspruch 8, bei dem die Pegeldetektoreinrichtung (75, 76) folgende Teile umfaßt:

einen Bandpaß (21), der im wesentlichen nur für das Frequenzband des ersten, zweiten, dritten und vierten Audiosignals durchlässig ist,

eine Pegeldetektoreinrichtung (22) zur Erfassung des Pegels in diesem Frequenzband

sowie eine Vergleichereinrichtung (23), die den Pegel in dem genannten Frequenzband mit einem vorgegebenen Pegel vergleicht und in Abhängigkeit hiervon Steuersignale zur Auswahl des linken und des rechten Stereokanalsignals entweder aus dem Audiosignalprozessor (30) oder aus dem Signalgemischprozessor (50) erzeugt.

10. Gerät zur Wiedergabe von Video- und Audiosignalen nach Anspruch 8, bei dem die Pegeldetektoreinrichtung folgende Teile umfaßt:

eine erste und eine zweite Pegeldetektoreinrichtung (75, 76), die dem ersten bzw. dem zweiten Audio- und Videosignalgemisch zugeordnet sind und deren Pegel erfassen,

sowie eine mit der ersten und der zweiten Pegeldetektoreinrichtung verbundene Einrichtung (73, 74) zur Erzeugung von Steuersignalen in Abhängigkeit von den Pegeln des ersten und des zweiten Audio-Videosignalgemischs und zur Auswahl des linken und des rechten Stereokanalsignals entweder aus dem Audiosignalprozessor (30) oder aus dem Signalgemischprozessor (50).

11. Gerät zur Wiedergabe von Video- und Audiosignalen nach Anspruch 10, bei dem die Steuersignal-Verarbeitungseinrichtung (74) folgende Teile umfaßt:

ein ODER-Glied (73), dem die den Pegeln des ersten und des zweiten Audio-Videosignalgemischs entsprechenden Ausgangssignale der ersten und der zweiten Pegeldetektoreinrichtung (75, 76) zuführbar sind und das in Abhängigkeit hiervon Ausgangssignale abgibt,

sowie eine Steuersignalgeneratoreinrichtung (74), die die Ausgangssignale des ODER-Glieds (73) aufnimmt und in Abhängigkeit hiervon die genannten Steuersignal erzeugt.

12. Gerät zur Wiedergabe von Video- und Audiosignalen nach Anspruch 8, bei dem das magnetische Aufzeichnungsmedium (1F) in einem Kassettengehäuse (3) angeordnet ist

und bei dem eine mit einem Stück des Kassettengehäuses (3) zusammenwirkende weitere Detektoreinrichtung (7) das linke und das rechte Stereokanalsignal entweder des Audiosignalprozessors (30) oder des Signalgemischprozessor (50) auswählt.

## Revendications

1. Appareil de restitution de signaux vidéo et d'audiofréquences, comprenant:

un dispositif (30) de traitement de signaux d'audiofréquences destiné à restituer au moins un signal d'audiofréquences enregistré dans au moins une piste longitudinale ($T_L$, $T_R$) formée sur un support magnétique d'enregistrement (1F), et

un dispositif (50) de traitement de signaux mélangés destiné à restituer le signal d'audiofréquences à partir des premiers et seconds signaux vidéo et d'audiofréquences mélangés qui sont enregistrés dans des premières et des secondes pistes obliques adjacentes ($T_A$, $T_B$) respectivement, formées sur le support magnétique d'enregistrement (1F),

caractérisé par:

un dispositif de détection de niveau (22; 75, 76) destiné à recevoir au moins l'un des premiers et seconds signaux mélangés vidéo et d'audiofréquences afin qu'il détecté le niveau de l'un des premiers et seconds signaux mélangés vidéo et d'audiofréquences,

un dispositif (23; 74) de formation d'un signal de commande en fonction du niveau du signal choisi parmi les premiers et seconds signaux mélangés vidéo et d'audiofréquences, détectés par le dispositif de détection de niveau (22; 75, 76), et

un dispositif (41L, 41R) de sélection automatique de signaux, commandé par ledit signal de commande et destiné à sélectionner automatiquement le signal d'audiofréquences du dispositif de traitement de signaux (50) lorsque le signal d'audiofréquences est restitué par celui-ci et à sélectionner automatiquement le signal d'audiofréquences provenant du dispositif (30) de traitement de signaux d'audiofréquences à tous les autres moments.

2. Appareil selon la revendication 1, dans lequel des parties au moins des premiers et seconds signaux vidéo sont modulées en fréquence autour d'une première fréquence centrale lorsqu'au moins un signal d'audiofréquences est mélangé à ces signaux et sont modulées en fréquence autour d'une seconde fréquence centrale à tous les autres moments, et l'appareil comporte en outre un dispositif (80) de traitement de signaux vidéo destiné à recevoir les signaux de commande du dispositif (22; 75, 76) de détection de niveau et à démoduler les premiers et seconds signaux vidéo en fonction de ces signaux de commande.

3. Appareil selon la revendication 1, dans lequel le signal d'audiofréquences est un signal modulé en fréquence qui occupe une bande de fréquences se trouvant dans les premiers et seconds signaux mélangés vidéo et d'audiofréquences, et dans lequel le dispositif (22) de détection de niveau comprend:

un filtre passe-bande (21) destiné à transmettre pratiquement ladite bande de fréquences du signal d'audiofréquences uniquement,

un dispositif (22) de détection du niveau de la bande de fréquences, et

un comparateur (23) du niveau de la bande de fréquences à un niveau prédéterminé afin que le cas où le signal d'audiofréquences est mélangé aux premiers et seconds signaux vidéo soit identifié.

4. Appareil selon la revendication 1, dans lequel le dispositif (75, 76) de détection de niveau comprend un premier et un second détecteur de niveau (75, 76) destinés à détecter respectivement les niveaux des premiers et seconds signaux mélangés vidéo et d'audiofréquences.

5. Appareil selon la revendication 4, dans lequel le dispositif de détection de niveau (75, 76) comporte en outre:

une porte OU (73) reliée aux premier et second détecteurs de niveaux (75, 76) et créant un signal

indicateur d'audiofréquences en fonction de leurs signaux de sortie, et

un dispositif (74) générateur d'un signal de commande destiné à recevoir le signal indicateur d'audiofréquences et à créer des signaux de commande assurant la sélection du signal d'audiofréquences provenant du dispositif (30) de traitement de signaux d'audiofréquences.

6. Appareil selon la revendication 1, dans lequel le support magnétique d'enregistrement (1F) est placé dans un boîtier (3) ayant une partie indicatrice (5) destinée à indiquer si le signal d'audiofréquences est mélangé aux premiers et seconds signaux vidéo, et dans lequel un dispositif détecteur supplémentaire (7) coopère avec la partie indicatrice (5) afin qu'il sélectionne le signal d'audiofréquence provenant du dispositif (50) de traitement de signaux mélangés.

7. Appareil selon la revendication 6, dans lequel le dispositif supplémentaire de détection (7) comporte un commutateur (7) destiné à coopérer avec une patte amovible (5) qui forme la partie indicatrice du boîtier (3).

8. Appareil selon la revendication 1, dans lequel deux signaux d'audiofréquences comprenant des signaux stéréophoniques de voies gauche et droite sont enregistrés dans des pistes longitudinales respectives $(T_L, T_R)$ portées par le support magnétique d'enregistrement (1F), et dans lequel les signaux stéréophoniques des voies gauche et droite sont modulés en fréquence par une première, une seconde, une troisième et une quatrième porteuse $(f_1, f_2, f_3, f_4)$ afin qu'un premier, un second, un troisième et un quatrième signal modulé d'audiofréquences, soient formés, les premier et second signaux modulés de d'audiofréquences étant mélangés au premier signal vidéo afin qu'ils forment le premier signal mélangé vidéo et d'audiofréquences, et le troisième et le quatrième signal modulé d'audiofréquences étant mélangés au second signal vidéo afin qu'ils forment le second signal mélangé vidéo et d'audiofréquences, et dans lequel le dispositif de détection de niveau (22; 75, 76) détecte le cas où les signaux stéréophoniques des voies gauche et droite sont incorporés dans les signaux enregistrés dans les pistes obliques $(T_A, T_B)$ portées par le support magnétique d'enregistrement (1F) et sélectionne les signaux stéréophoniques des voies gauche et droite provenant du dispositif (50) de traitement de signaux mixtes et sélectionne les signaux stéréophoniques des voies gauche et droite provenant du dispositif (30) de traitement des signaux d'audiofréquences à tous les autres moments.

9. Appareil selon la revendication 8, dans lequel le dispositif de détection de niveau (75, 76) comporte:

un filtre passe-bande (21) destiné à transmettre pratiquement la bande de fréquences des premier, second, troisième et quatrième signaux modulés d'audiofréquences uniquement,

un dispositif (22) de détection de niveau destiné à déterminer le niveau de la bande de fréquences, et

un comparateur (23) du niveau de la bande de fréquences à un niveau prédéterminé, destiné à créer en conséquence des signaux de commande de sélection des signaux stéréophoniques des voies gauche et droite provenant de l'un des dispositifs de traitement des signaux d'audiofréquences (30) et des signaux mélangés (50).

10. Appareil selon la revendication 8, dans lequel le dispositif de détection de niveau (22) comporte un premier et un second dispositif de détection de niveau (75, 76) associés chacun à l'un des premiers et seconds signaux mélangés vidéo et d'audiofréquences afin que leur niveau soit détecté, et

un dispositif (73, 74) relié aux premier et second dispositif de détection de niveau et destiné à créer des signaux de commande en fonction des niveaux des premiers et seconds signaux mélangés vidéo et d'audiofréquences et à sélectionner les signaux stéréophoniques des voies gauche et droite provenant de l'un des dispositifs de traitement des signaux d'audiofréquences (30) et des signaux mélangés (50).

11. Appareil selon la revendication 10, dans lequel le dispositif (74) de traitement des signaux de commande comprend:

une porte OU (73) destinée à recevoir les signaux de sortie du premier et du second dispositif de détection de niveau (75, 76) correspondant aux niveaux des premiers et seconds signaux mélangés vidéo et d'audiofréquences, et à créer des signaux correspondants de sortie, et

un générateur (74) de signaux de commande destiné à recevoir les signaux de sortie de la porte OU (73) et à créer les signaux correspondants de commande.

12. Appareil selon la revendication 8, dans lequel le support magnétique d'enregistrement (1F) est logé dans un boîtier (3) de cassette, et dans lequel un dispositif supplémentaire de détection (7) coopère avec une partie du boîtier (3) de la cassette afin qu'il sélectionne les signaux stéréophoniques des voies gauche et droite provenant de l'un des dispositifs de traitement des signaux d'audiofréquence (30) et des signaux mélangés (50).

FIG. 2

$T_L$
$T_R$
$T_A (Y_F, C_L)$
$T_B (Y_F, C_L)$
IN
$T_C$

FIG. 4

$T_L$
$T_R$
$T_A \begin{pmatrix} Y_F, C_L \\ L_A, R_A \end{pmatrix}$
$T_B \begin{pmatrix} Y_F, C_L \\ L_B, R_B \end{pmatrix}$
IF
$T_C$

FIG. 1

L(dB)
0
-10
-20
-30
-40
-50

$C_L$
$B_S$
$Y_F$

0  fc  1  2  3  3.6 4 4.2  4.8 5  6
f(MHz)

FIG. 3

L(dB)
0
-10
-20
-30
-40
-50

$C_L$
$L_A$
$L_B$
$R_A$
$R_B$
$f_1$ $f_2$ $f_3$ $f_4$
$B_S$
$Y_F$

0  fc  1  2  3  4  4.6 5 5.2  6
f(MHz)

FIG. 5A

FIG 5B

FIG. 5A

FIG. 5B

X1  X2

X3

HPF  81 — $Y_F$ — LIM  82 — DEMOD  83 — LPF  84 — Y  85

80

100

A
B
13
Sw

TRAP  71

N
F
72

LPF  86 — $C_L$ — FREQ CONV  87 — BPF  88 — COMB FILTER  89 — C  90

BPF  21 — LEVEL DET  22 — CMP  23 — $S_D$

20

0 087 303

3

FIG. 6

FIG. 7

FIG. 8

FIG. 9

FIG. IO A

FIG 10A

FIG. 10B

0 087 303